(19) Europäisches Patentamt
European Patent Office
Office européen des brevets

(11) **EP 4 029 797 A1**

(12) **EUROPEAN PATENT APPLICATION**
published in accordance with Art. 153(4) EPC

(43) Date of publication:
**20.07.2022 Bulletin 2022/29**

(51) International Patent Classification (IPC):
**B65D 1/00** (2006.01)    **B21D 51/26** (2006.01)
**B65D 1/16** (2006.01)

(21) Application number: **19945264.0**

(52) Cooperative Patent Classification (CPC):
**B21D 51/26; B65D 1/00; B65D 1/16**

(22) Date of filing: **13.09.2019**

(86) International application number:
**PCT/JP2019/036200**

(87) International publication number:
**WO 2021/049029 (18.03.2021 Gazette 2021/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Daiwa Can Company**
**Chiyoda-ku, Tokyo 100-7009 (JP)**
• **NIPPON STEEL CORPORATION**
**Chiyoda-ku**
**Tokyo 100-8071 (JP)**

(72) Inventors:
• **FUKUNAGA, Minoru**
**Sagamihara-shi, Kanagawa 252-5183 (JP)**
• **NAKAMURA, Koichiro**
**Sagamihara-shi, Kanagawa 252-5183 (JP)**
• **HIRANO, Shigeru**
**Tokyo 100-8071 (JP)**
• **TANI, Yoshiaki**
**Tokyo 100-8071 (JP)**

(74) Representative: **AWA Sweden AB**
**Junkersgatan 1**
**582 35 Linköping (SE)**

(54) **METHOD FOR MANUFACTURING TWO-PIECE CAN, CAN DRUM, AND METAL SHEET**

(57)     A method for manufacturing a two-piece can includes punching a metal plate into a disk shape, the metal plate including a Sn-plated layer of 100 mg/m2 or more and 1500 mg/m2 or less provided on a base material made of steel, a Cr-plated layer of 6 mg/m2 or more and 100 mg/m2 or less provided on the Sn-plated layer, and a coating layer laminated on the Cr-plated layer and made of a thermoplastic resin, the metal plate having not been heat-treated and including a Ni-plated layer between the base material and the Sn-plated layer, or having been heat-treated and including no Ni-plated layer on the base material; and shaping by performing drawing and ironing on the metal plate having the disk shape into a can body having a bottomed cylindrical shape, so that the coating layer forms an inner surface of the can body, wherein in the shaping, the drawing and ironing is performed so that ((Tb-Tw)/Tb) × 100, which is a plate thickness reduction rate from the metal plate having the disk shape to the can body, is set as 35% ≤ ((Tb-Tw)/Tb) × 100(%) ≤ 60%, where Tw is a plate thickness of a thinnest part of a cylindrical wall portion of the can body, and Tb is a plate thickness of a bottom portion of the can body.

F I G. 1

EP 4 029 797 A1

**Description**

FIELD

The present invention relates to a method for manufacturing a two-piece can obtained by drawing and ironing a metal plate, a can body, and a metal plate.

BACKGROUND

As a steel can for use as a beverage container, a two-piece can formed by drawing and ironing a metal plate is known. Such a two-piece can is used as a canned beverage container by forming a bottomed cylindrical can body having a bottom, filling the can body with a beverage, and then roll-seaming a can lid to the can body.
The metal plate used for the two-piece can is formed by laminating a thermoplastic resin material on a surface of a steel plate material using steel as a base material, in order to prevent corrosion caused by contact with the beverage filled inside. In the metal plate, a plated layer of Sn or the like is provided on a surface of a base material in order to provide corrosion resistance, and a resin material is laminated thereon.
International Publication No. 2015/037074 discloses a method for manufacturing a two-piece can that improves corrosion resistance. In the method for manufacturing a two-piece can disclosed in International Publication No. 2015/037074, for example, before forming uneven beads or a bottle rim on a can body, the can body is heated at a temperature equal to or higher than the melting temperature of a resin material for a predetermined time and then rapidly cooled, thereby preventing peeling of the resin material laminated on the surface of a steel plate material.

CITATION LIST

PATENT LITERATURE

Patent Literature 1: International Publication No. 2015/037074

SUMMARY

TECHNICAL PROBLEM

In the drawing and ironing process for such a two-piece can, a large force is applied to the surface of the metal plate serving as the inner surface of the can. Therefore, when the metal plate is drawn and ironed, the plated layer of Sn existing in a sea-island shape on a base material before the drawing and ironing becomes a stripe shape. When the Sn-plated layer becomes a stripe shape, the corrosion resistance is reduced, and thus there is a problem wherein the corrosion resistance of the can body obtained by processing the metal plate is reduced.
Accordingly, it is an object of the present invention to provide a method of manufacturing a two-piece can, a can body, and a metal plate that can improve corrosion resistance.

SOLUTION TO PROBLEM

According to one aspect of the present invention, a method for manufacturing a two-piece can includes punching a metal plate into a disk shape, the metal plate including a Sn-plated layer of 100 mg/m$^2$ or more and 1500 mg/m$^2$ or less provided on a base material made of steel, a Cr-plated layer of 6 mg/m$^2$ or more and 100 mg/m$^2$ or less provided on the Sn-plated layer, and a coating layer laminated on the Cr-plated layer and made of a thermoplastic resin, the metal plate having not been heat-treated and including a Ni-plated layer between the base material and the Sn-plated layer, or having been heat-treated and including no Ni-plated layer on the base material; and shaping by performing drawing and ironing on the metal plate having the disk shape into a can body having a bottomed cylindrical shape, so that the coating layer forms an inner surface of the can body, wherein in the shaping, the drawing and ironing is performed so that ((Tb-Tw)/Tb) × 100, which is a plate thickness reduction rate from the metal plate having the disk shape to the can body, is set as 35% ≤ ((Tb-Tw)/Tb) × 100(%) ≤ 60%, where Tw is a plate thickness of a thinnest part of a cylindrical wall portion of the can body, and Tb is a plate thickness of a bottom portion of the can body.
According to one aspect of the present invention, a can body is shaped from a metal plate and having a bottomed cylindrical shape, the metal plate including a Sn-plated layer of 100 mg/m$^2$ or more and 1500 mg/m$^2$ or less provided on a base material made of steel, a Cr-plated layer of 6 mg/m$^2$ or more and 100 mg/m$^2$ or less provided on the Sn-plated layer, and a coating layer laminated on the Cr-plated layer and made of a thermoplastic resin, the metal plate having not been heat-treated and including a Ni-plated layer between the base material and the Sn-plated layer, or having been heat-treated and including no Ni-plated layer on the base material, and in the shaping, the drawing and ironing is performed so that ((Tb-Tw)/Tb) × 100, which is a plate thickness reduction rate from the metal plate having a disk shape to the can body, is set as 35% ≤ ((Tb-Tw)/Tb) × 100(%) ≤ 60%, where Tw is a plate thickness of a thinnest part of a cylindrical wall portion of the can body, and Tb is a plate thickness of a bottom portion of the can body.

According to one aspect of the present invention, a metal plate includes a base material made of steel, a Sn-plated layer of 100 mg/m$^2$ or more and 1500 mg/m$^2$ or less provided on the base material, a Cr-plated layer of 6 mg/m$^2$ or more and 100 mg/m$^2$ or less provided on the Sn-plated layer, and a coating layer laminated on the Cr-plated layer and made of a thermoplastic resin.

ADVANTAGEOUS EFFECTS OF INVENTION

According to the present invention, it is possible to provide a method for manufacturing a two-piece can capable of improving corrosion resistance, a can body, and a metal plate.

BRIEF DESCRIPTION OF THE DRAWINGS

FIG. 1 is a cross-sectional view schematically showing a configuration of a two-piece can according to an embodiment of the present invention.
FIG. 2 is a cross-sectional view showing a part of the configuration of a metal plate for shaping a can body of the two-piece can.
FIG. 3 is a cross-sectional view showing a part of the configuration of another example of the metal plate.
FIG. 4 is a flowchart showing an example of a method for manufacturing the two-piece can.
FIG. 5 is a flowchart schematically showing an example of a method for manufacturing the can body.
FIG. 6 is an explanatory view showing a result of an evaluation test of the can body.
FIG. 7 is an explanatory view showing a result of an evaluation test of the can body.
FIG. 8 is an explanatory view showing a result of an evaluation test of the can body.
FIG. 9 is an explanatory view showing a result of an evaluation test of the can body.
FIG. 10 is an explanatory view showing a result of an evaluation test of the can body.
FIG. 11 is an explanatory view showing a result of an evaluation test of the can body.

DETAILED DESCRIPTION

[Embodiment]

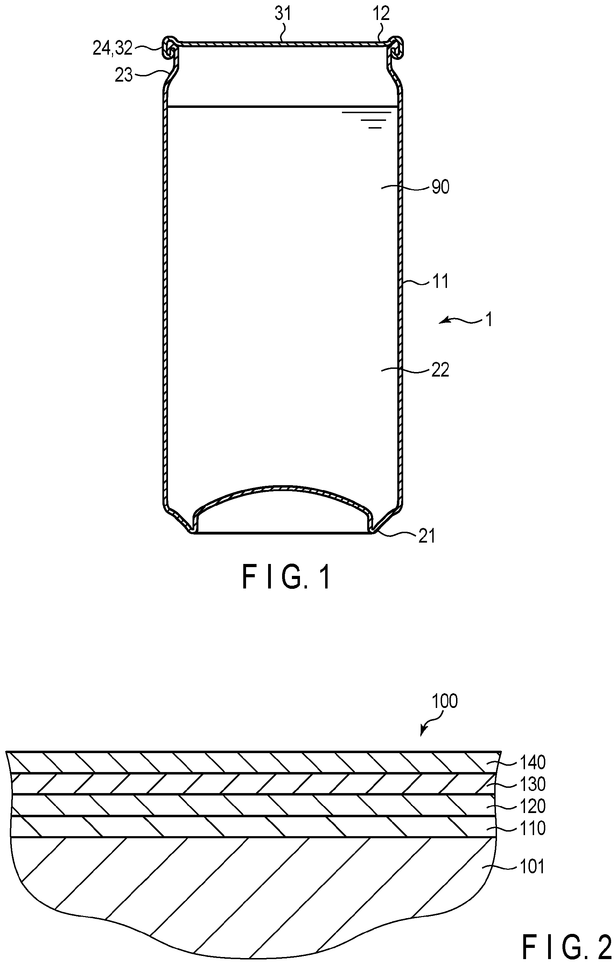

Hereinafter, a two-piece can 1 according to an embodiment of the present invention will be described with reference to FIGS. 1 to 5.

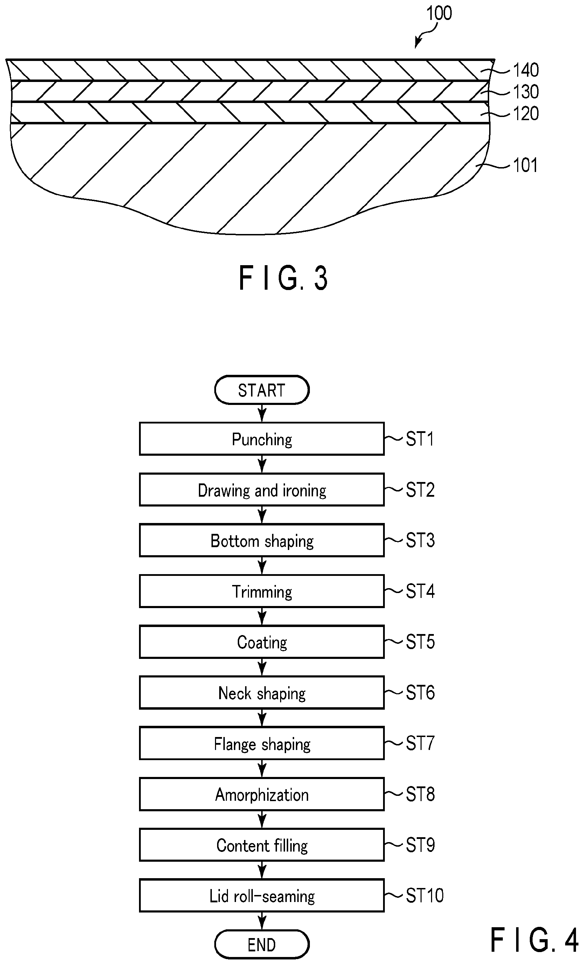

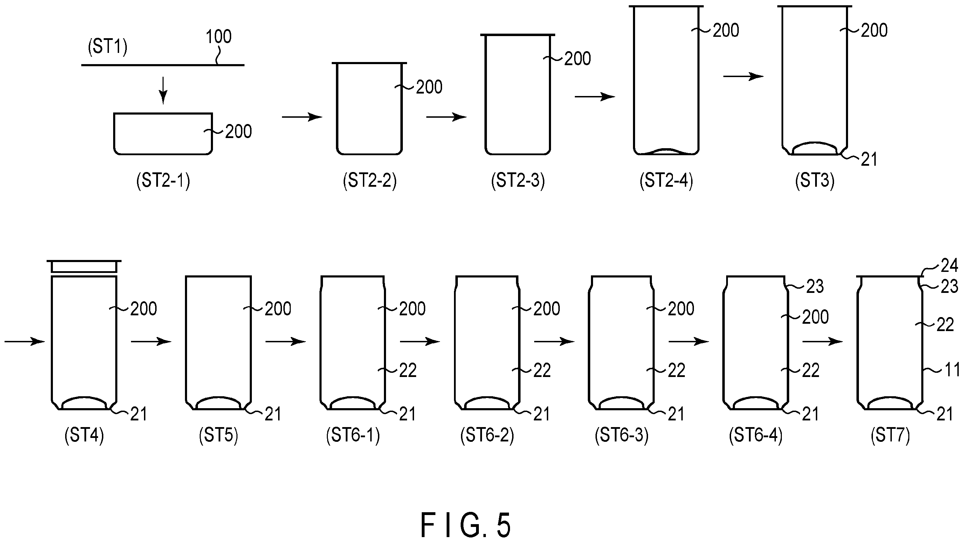

FIG. 1 is a cross-sectional view schematically showing a configuration of the two-piece can 1 according to the embodiment of the present invention. FIG. 2 is a cross-sectional view showing an example of a metal plate 100 for shaping a can body 11 of the two-piece can 1, that shows an inner surface side of the can body 11. FIG. 3 is a cross-sectional view showing another example of the metal plate 100 for shaping the can body 11, that shows an inner surface side of the can body 11. FIG. 4 is a flowchart showing an example of a method for manufacturing the two-piece can 1. FIG. 5 is a flowchart schematically showing an example of a method for manufacturing the can body 11.
The two-piece can 1 includes the can body 11, and a lid 12 which is roll-seamed to the can body 11. The can body 11 is filled with a content 90 such as a beverage, and the lid 12 is roll-seamed to the can body 11, thereby constituting the two-piece can 1.
The can body 11 is formed in a bottomed cylindrical shape having a bottom 21 constituting a bottom portion of the can body 11, a body portion 22 constituting a cylindrical wall portion, and a neck 23 having a reduced diameter at an upper end of the body portion 22. The can body 11 has a flange 24 at an upper end of the neck 23. The can body 11 is constituted by shaping through drawing and ironing a disk-shaped metal plate 100.
In the can body 11, ((Tb-Tw)/Tb) × 100, which is a plate thickness reduction rate when the can body 11 is shaped from the disk-shaped metal plate 100, is set as follows, where Tw is a plate thickness of the thinnest part of the body portion 22 of the can body 11, and Tb is a plate thickness of the bottom 21 of the can body 11:

```
plate thickness of the bottom 21 of the can body 11:
    35% ≤ ((Tb-Tw)/Tb) × 100(%) ≤ 60%.
```

Here, for example, the plate thickness Tb of the bottom 21 is the same or substantially the same as the plate thickness of the disk-shaped metal plate 100.

The metal plate 100 includes a base material 101, a Sn-plated layer 120 provided on the base material 101, a Cr-plated layer 130 provided on the Sn-plated layer 120, and a coating layer 140 formed of a resin material provided on the Cr-plated layer 130. The metal plate 100 is a steel plate that has not been heat-treated and includes a Ni-plated layer 110 between the base material 101 and the Sn-plated layer 120, as shown in FIG. 2, or a steel plate that has been heat-treated and includes no Ni-plated layer 110 between the base material 101 and the Sn-plated layer 120, as shown in FIG. 3. Here, the heat treatment is a process of performing reflow treatment on Sn.

The base material 101 is constituted by a general steel material for can manufacturing. As the base material 101 used for the metal plate 100 having the Ni-plated layer 110, for example, a CL material is used. As the base material 101 used for the metal plate 100 having no Ni-plated layer 110, for example, an LTS material is used. Here, the CL material is CANLITE (registered trademark), and the LTS material is Low Tin Steel.

The Ni-plated layer 110 is provided on at least one main surface of the base material 101, more specifically, on the main surface on the inner surface side of the can body 11, and the weight per unit area is set to be less than 200 mg/m$^2$.

The Sn-plated layer 120 is provided on at least one main surface of the base material 101. In the metal plate 100 including the Ni-plated layer 110, the Sn-plated layer 120 is provided on the Ni-plated layer 110, and in the metal plate 100 having no Ni-plated layer 110, the Sn-plated layer 120 is provided on the base material 101. In the Sn-plated layer 120, Sn is uniformly distributed in a granular shape on the base material 101, and the coating ratio with respect to the main surface of the base material 101 is configured to be 44% or more and 63% or less. In addition, the weight per unit area of the Sn-plated layer 120 is set to 100 mg/m$^2$ or more and 1500 mg/m$^2$ or less. Further, a portion of the Sn-plated layer 120 is alloyed with Fe of the base material 101, and an Fe-Sn alloy is formed between the base material 101 and the Sn-plated layer 120.

The Cr-plated layer 130 is provided on the Sn-plated layer 120 provided on at least one main surface of the base material 101, and the weight per unit area thereof is set to 6 mg/m$^2$ or more and 100 mg/m$^2$ or less.

The coating layer 140 is made of an amorphous thermoplastic resin material having excellent dent resistance. Examples of the thermoplastic resin material include polyester resins such as polyethylene terephthalate, polybutylene terephthalate, polyethylene naphthalate, an ethylene terephthalate/isophthalate copolymer, and a butylene terephthalate/isophthalate copolymer; olefin resins such as polyethylene, polypropylene, an ethylenepropylene copolymer, and a modified olefin; polycarbonate; nylon resins; and mixed materials thereof. The melting temperature of the thermoplastic resin material is 200 °C to 260 °C.

Preferably, the thermoplastic resin material is a polyester resin. The coating layer 140 is formed by laminating a film made of the polyester resin on the Cr-plated layer 130 via an adhesive layer made of an adhesive.

In the metal plate 100 mentioned above, a base plate including the base material 101, the Ni-plated layer 110, the Sn-plated layer 120, and the Cr-plated layer 130 is set to a thickness of 0.15 mm to 0.30 mm, the coating layer 140 provided on a main surface which is the inner surface side of the can body 11 is set to a thickness of 2 $\mu$m to 40 $\mu$m, and the coating layer provided on a main surface which is the outer surface side of the can body 11 is set to a thickness of 10 $\mu$m to 30 $\mu$m. The thickness of the adhesive layer provided on each coating layer is set to 0.5 $\mu$m to 5 $\mu$m.

The lid 12 includes a panel portion 31 and a flange 32. The panel portion 31 has a tab fixed by a rivet and a score line provided adjacent to the tab. That is, the lid 12 is a so-called stay-on-tab lid or a full-open-end lid.

Next, an example of a method for manufacturing the two-piece can 1 configured as described above will be described with reference to FIGS. 4 and 5. In this embodiment, the two-piece can 1 will be described using an example in which a can having a capacity of 290 ml is shaped.

First, a circular metal plate 100 is punched out from a flat metal plate by punching (step ST1). Next, the circular metal plate 100 is shaped into a cup shape by a drawing and ironing process in which pressing of the metal plate 100 is repeated using a mold such as a pump or a die having an appropriate shape and size (step ST2). For example, as shown in steps ST2-1 to ST2-3 of FIG. 5, the drawing and ironing process is performed in a plurality of steps to shape the metal plate 100 into a bottomed cylindrical intermediate product 200 having a predetermined depth from a disk shape, and to shape a bottom of the intermediate product 200 into a dome shape as shown in ST2-4 of FIG. 5 for a next step.

Next, the bottom 21 is shaped in the intermediate product 200 (step ST3). Next, an opening end of the intermediate product 200 with the shaped bottom 21 is trimmed so that the intermediate product 200 has a predetermined height (step ST4). Next, clear coating is performed on the trimmed intermediate product 200 (step ST5), and shaping of the neck 23 is performed (step ST6). For example, as shown in steps ST6-1 to ST6-4 of FIG. 5, the neck 23 is shaped at the upper end of the body portion 22 by gradually reducing the diameter of the opening end of the intermediate product 200.

Next, the flange 24 is shaped at the upper end of the neck 23 (step ST7) to shape the can body 11. Next, amorphization treatment is performed so that 35% or more and 100% or less of the coating layer 140 on the inner surface of the can body 11 is amorphized (step ST8). As a specific example, the can body 11 is heat-treated so that the surface temperature becomes equal to or higher than the melting point temperature of the coating layer 140 and equal to the melting point temperature plus 30 °C or lower, and the temperature is maintained for a predetermined time. For example, when a polyester resin having a melting point of 240 °C is used as the resin material constituting the coating layer 140, the surface temperature of the can body 11 is heated to 250 °C. Thereafter, the can body 11 is rapidly cooled to amorphize 35% or more and 100% or less of the polyester resin constituting the coating layer 140.

Next, the can body 11 is filled with the beverage 90, which is the contents (step ST9). Thereafter, the lid 12 is disposed at an upper end of the can body 11, and the flange 24 of the can body 11 and the flange 32 of the lid 12 are roll-seamed (step ST10). In this way, the two-piece can 1 is manufactured.

According to the two-piece can 1 configured as described above, the coating layer 140 is provided on the metal plate 100 for shaping the can body 11, and drawing and ironing is performed from above the coating layer 140, thereby improving the ability to carry out the processing of the Sn-plated layer 120 on the base material 101 and maintaining a state in which Sn of the Sn-plated layer 120 is uniformly distributed from before shaping the metal plate into the can body 11 to after shaping the metal plate into the can body 11. That is, the can body 11 can prevent a situation in which Sn exists on the Sn-plated layer 120 in a sea-island shape and then in a stripe shape by subsequent shaping. As a result, Sn of the Sn-plated layer 120 after the can body 11 is shaped maintains a uniform state, and thus has high corrosion resistance.

After shaping the can body 11 from the metal plate 100, the can body 11 is heat-treated at a temperature equal to or higher than the melting point of the coating layer 140 and then rapidly cooled to amorphize the coating layer 140, thereby resetting damage caused by stress applied when the coating layer 140 is formed. Therefore, the can body 11 can have a higher corrosion resistance.

In addition, since an Fe-Sn alloy is formed by Fe of the base material 101 and Sn of the Sn-plated layer 120 by the drawing and ironing process and the heating process, the corrosion resistance of the can body 11 is further improved.

In shaping the can body 11 from the metal plate 100, the plate thickness reduction rate $((Tb-Tw)/Tb) \times 100$ is set as $35\% \leq ((Tb-Tw)/Tb) \times 100(\%) \leq 60\%$, where Tw is a plate thickness of the thinnest part of the body portion 22 and Tb is a plate thickness of the bottom 21. For example, when the metal plate 100 is 0.229 mm thick (0.190 mm thick excluding the coating layer 140), the can body of the two-piece can 1 having a capacity of 300 ml is drawn and ironed, so that the plate thickness Tw of the thinnest part of the can body 11 is 0.108 mm. With such a plate thickness reduction rate, the can body 11 can be a container having a pressure resistance with even a small amount of material.

Furthermore, by setting the coating ratio of Sn of the Sn-plated layer 120 to 44% or more, the can body 11 can have corrosion resistance against acidic beverages.

As described above, according to the two-piece can 1 of one embodiment of the present invention, corrosion resistance can be improved.

Note that the present invention is not limited to the above-described embodiment, and for example, the two-piece can 1 described above may have not only the shape of a 300 ml capacity but also a shape of a 250 ml, a 350 ml, or a 500 ml capacity.

The present invention is not limited to the above-described embodiment, and in the practical stage, various modifications may be made without departing from the spirit of the invention. Furthermore, embodiments may be appropriately combined as much as possible, and in that case, combined effects may be obtained. Moreover, the above-described embodiment includes various stages of the invention, and various inventions can be extracted by suitably combining structural elements disclosed herein. For example, even if some constituent elements are deleted from all the constituent elements shown in the embodiment, if the problem described in the section of the problem to be solved by the invention can be solved and the effect described in the section of the effect of the invention can be obtained, the configuration from which the constituent elements are deleted can be extracted as the invention.

[Examples]

In order to make the features of the present invention more tangible, evaluation tests using examples and comparative examples will be described below. However, the scope of the present invention is not limited to the following examples.

[Example 1]

A can body 11 was shaped from a metal plate 100 that was provided with a Ni-plated layer 110, a Sn-plated layer 120, a Cr-plated layer 130, and a coating layer 140 on a base material 101 without heat treatment, so that a plate thickness reduction rate $((Tb-Tw)/Tb) \times 100$ became 57%. The weight per unit area of the Ni-plated layer 110 was 24 $mg/m^2$, the weight per unit area of the Sn-plated layer 120 was 720 $mg/m^2$, and the weight per unit area of the Cr-plated layer 130 was 23 $mg/m^2$. Further, a polyester resin sheet having a melting point temperature of 240 °C was used as the coating layer 140, and the polyester resin sheet was adhered to the Cr-plated layer 130 with an adhesive. The metal plate 100 had a total thickness of 0.175 mm, the coating layer 140 was 25 $\mu$m thick, and the adhesive layer was 2 $\mu$m thick.

[Example 2]

A can body 11 was shaped from a heat-treated metal plate 100 provided with a Sn-plated layer 120, a Cr-plated layer 130, and a coating layer 140 on a base material 101, so that a plate thickness reduction rate ((Tb-Tw)/Tb) $\times$ 100 became 57%. The weight per unit area of the Sn-plated layer 120 was 780 mg/m$^2$, and the weight per unit area of the Cr-plated layer 130 was 26 mg/m$^2$. Further, a polyester resin sheet having a melting point temperature of 240 °C was used as the coating layer 140, and the polyester resin sheet was adhered to the Cr-plated layer 130 with an adhesive. The metal plate 100 had a total thickness of 0.175 mm, the coating layer 140 was 25 $\mu$m thick, and the adhesive layer was 2 $\mu$m thick. The metal plate 100 of Example 2 includes no Ni-plated layer 110.

[Comparative Example 1]

A can body 11 was shaped from a heat-treated metal plate 100 provided with a Ni-plated layer 110, a Sn-plated layer 120, a Cr-plated layer 130, and a coating layer 140 on a base material 101, so that a plate thickness reduction rate ((Tb-Tw)/Tb) $\times$ 100 became 57%. The weight per unit area of the Ni-plated layer 110 was 25 mg/m$^2$, the weight per unit area of the Sn-plated layer 120 was 660 mg/m$^2$, and the weight per unit area of the Cr-plated layer 130 was 22 mg/m$^2$. Further, a polyester resin sheet having a melting point temperature of 240 °C was used as the coating layer 140, and the polyester resin sheet was adhered to the Cr-plated layer 130 with an adhesive. The metal plate 100 had a total thickness of 0.175 mm, the coating layer 140 was 25 $\mu$m thick, and the adhesive layer was 2 $\mu$m thick.

[Comparative Example 2]

A can body 11 was shaped from a heat-treated metal plate 100 provided with a Ni-plated layer 110, a Sn-plated layer 120, a Cr-plated layer 130, and a coating layer 140 on a base material 101, so that a plate thickness reduction rate ((Tb-Tw)/Tb) $\times$ 100 became 57%. The weight per unit area of the Ni-plated layer 110 was 25 mg/m$^2$, the weight per unit area of the Sn-plated layer 120 was 1980 mg/m$^2$, and the weight per unit area of the Cr-plated layer 130 was 22 mg/m$^2$. Further, a polyester resin sheet having a melting point temperature of 240 °C was used as the coating layer 140, and the polyester resin sheet was adhered to the Cr-plated layer 130 with an adhesive. The metal plate 100 had a total thickness of 0.175mm, the coating layer 140 was 25 $\mu$m thick, and the adhesive layer was 2 $\mu$m thick.

[Comparative Example 3]

A can body 11 was shaped from a heat-treated metal plate 100 provided with a Ni-plated layer 110, a Sn-plated layer 120, a Cr-plated layer 130, and a coating layer 140 on a base material 101, so that a plate thickness reduction rate ((Tb-Tw)/Tb) $\times$ 100 became 57%. The weight per unit area of the Ni-plated layer 110 was 25 mg/m$^2$, the weight per unit area of the Sn-plated layer 120 was 1210 mg/m$^2$, and the weight per unit area of the Cr-plated layer 130 was 22 mg/m$^2$. Further, a polyester resin sheet having a melting point temperature of 240 °C was used as the coating layer 140, and the polyester resin sheet was adhered to the Cr-plated layer 130 with an adhesive. The metal plate 100 had a total thickness of 0.175 mm, the coating layer 140 was 25 $\mu$m thick, and the adhesive layer was 2 $\mu$m thick.

[Comparative Example 4]

A can body 11 was shaped from a metal plate 100 that was provided with a Ni-plated layer 110, a Cr plated-layer 130, and a coating layer 140 on a base material 101 without heat treatment, so that a plate thickness reduction rate ((Tb-Tw)/Tb) $\times$ 100 became 57%. No Sn-plated layer 120 was provided. The weight per unit area of the Ni-plated layer 110 was 553 mg/m$^2$, and the weight per unit area of the Cr-plated layer 130 was 5 mg/m$^2$. Further, a polyester resin sheet having a melting point temperature of 240 °C was used as the coating layer 140, and the polyester resin sheet was adhered to the Cr-plated layer 130 with an adhesive. The metal plate 100 had a total thickness of 0.175 mm, the coating layer 140 was 25 $\mu$m thick, and the adhesive layer was 2 $\mu$m thick.

[Comparative Example 5]

A can body 11 was shaped from a metal plate 100 that was provided with a Ni-plated layer 110, a Cr plated-layer 130, and a coating layer 140 on a base material 101 without heat treatment, so that a plate thickness reduction rate ((Tb-Tw)/Tb) $\times$ 100 became 57%. No Sn plated layer 120 was provided. The weight per unit area of the Ni plated layer 110 was 574 mg/m$^2$, and the weight per unit area of the Cr plated layer 130 was 59 mg/m$^2$. Further, a polyester resin sheet having a melting point temperature of 240 °C was used as the coating layer 140, and the polyester resin sheet was adhered to the Cr-plated layer 130 with an adhesive. The metal plate 100 had a total thickness of 0.175 mm, the coating layer 140 was 25 $\mu$m thick, and the adhesive layer was 2 $\mu$m thick.

[Comparative Example 6]

A can body 11 was shaped from a metal plate 100 that was obtained by laminating a coating layer 140 on a chromium-plated steel plate (TFS) obtained by applying a Cr-plated layer 130 on a base material 101 without heat treatment, so that a plate thickness reduction rate ((Tb-Tw)/Tb) $\times$ 100 became 57%. The metal plate 100 includes no Ni-plated layer 110 and no Sn-plated layer 120. The weight per unit area of the Cr-plated layer 130 was 120 mg/m$^2$.
Further, a polyester resin sheet having a melting point temperature of 240 °C was used as the coating layer 140, and the polyester resin sheet was adhered to the Cr-plated layer 130 with an adhesive. The metal plate 100 had a total thickness of 0.175 mm, the coating layer 140 was 25 $\mu$m thick, and the adhesive layer was 2 $\mu$m thick.

[Comparative Example 7]

A can body 11 was shaped from a metal plate 100 that was provided with a Cr plated-layer 130 and a coating layer 140 on a base material 101 without heat treatment, so that a plate thickness reduction rate ((Tb-Tw)/Tb) $\times$ 100 became 69%. No Ni-plated layer 110 was provided. The weight per unit area of the Sn-plated layer 120 was 5600 mg/m$^2$, and the weight per unit area of the Cr-plated layer 130 was 0.5 to 2.0 mg/m$^2$. An epoxy-based coating material was used for the coating layer 140. This epoxy-based coating material was applied onto the Cr-plated layer 130.
The total thickness of the metal plate 100 was 0.240 mm, and the coating layer 140 was 4 $\mu$m thick.

[Evaluation Test 1]

Evaluation Test 1 was performed to check, using an electron microscope, the distribution of Sn in the Sn-plated layer 120 on the surface from which the coating layer 140 of the metal plate 100 used for shaping the can body 11 of Examples 1 and 2 and Comparative Examples 1 to 3 and 7 was removed, and the distribution of Sn in the Sn-plated layer 120 on the surface from which the coating layer 140 of the inner surface of the can body 11 was removed after shaping the can body 11.
It was determined whether Sn of the Sn-plated layer 120 on the surface of the can body 11 from which the coating layer 140 was removed after the can body 11 was shaped was uniformly distributed or was distributed in a stripe shape.

[Evaluation Test 2]

As Evaluation Test 2, for amorphization of the coating layer 140 after shaping, an accelerated test was performed on the can body 11 of Examples 1 and 2 and Comparative Examples 1 to 6 in which heat treatment at 228 °C and rapid cooling were performed and on the can body 11 of Examples 1 and 2 and Comparative Examples 1 to 3 in which heat treatment at 250 °C and rapid cooling were performed. As the conditions of the accelerated test, the can body 11 was placed at a temperature of 55 °C, and after 240 hours had elapsed, the can body 11 was taken out and the state of the inner surface of the can body 11 was checked.
The evaluation criteria were as follows: o for no corrosion on the inner surface of the can body 11; □ for light corrosion on the inner surface of the can body 11; Δ for corrosion on the inner surface of the can body 11; × for corrosion on the entire inner surface of the can body 11; ×× for severe corrosion on the inner surface of the can body 11 ; and ××× for a large amount of severe corrosion on the entire inner surface of the can body 11.

[Evaluation Test 3]

As Evaluation Test 3, a beverage 90 was put into the can body 11 of each of Examples 1 and 2 and Comparative Examples 1 to 6 in which heat treatment at 228 °C and rapid cooling were performed to amorphize the coating layer 140 after shaping, and the can body 11 of each of Examples 1 and 2 and Comparative Examples 1 to 3 in which heat treatment at 250 °C and rapid cooling were performed to amorphize the coating layer 140 after shaping, and also put into the can body 11 of Comparative Example 7 in which heat treatment was performed at 205 °C to cure the coating layer 140. After the lid 12 was roll-seamed, a sterilization process was performed and the state of an inner surface of the can body 11 was checked.
The evaluation criteria were as follows: ◎ for no corrosion on the inner surface of the can body 11; o for corrosion on the inner surface of the can body 11;, □ for corrosion from the inner surface of the can body 11 to a depth of about 10% of the plate thickness; ◇ for corrosion from the inner surface of the can body 11 to a depth of about 25% of the plate thickness; △ for corrosion from the inner surface of the can body 11 to a depth of about 50% of the plate thickness; ▲ for corrosion from the inner surface of the can body 11 to a depth of about 75% of the plate thickness; and × for a large amount of corrosion on the inner surface of the can body 11 and perforation corrosion in the can body 11.

As the beverage 90, a malt-based carbonated alcoholic beverage and an acidic carbonated beverage were used. The malt-based carbonated alcoholic beverage was cold-packed and then the two-piece can 1 was subjected to warmer treatment, and the acidic carbonated beverage was cold-packed and then the two-piece can 1 was subjected to warmer treatment.

[Results of Evaluation Tests]

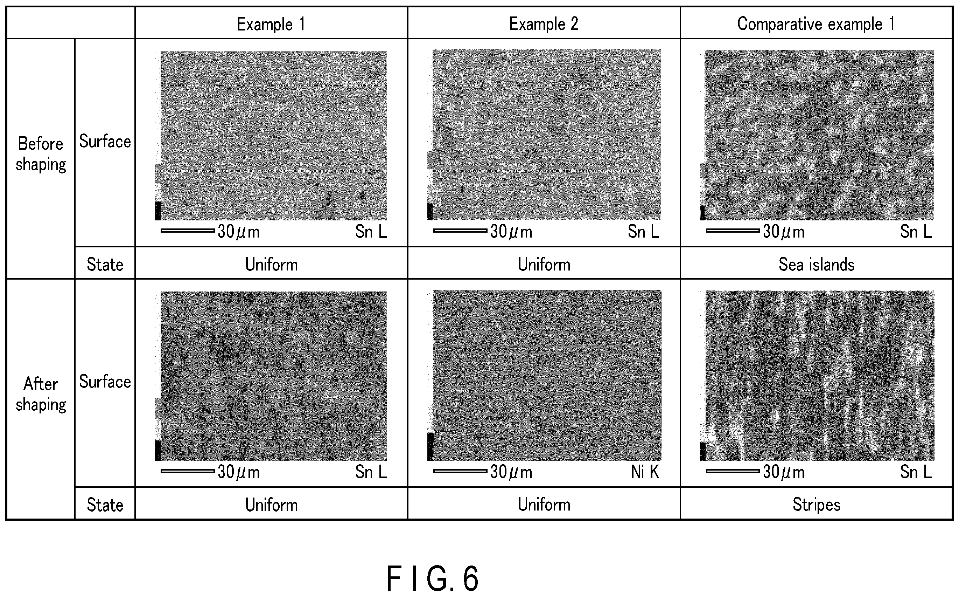

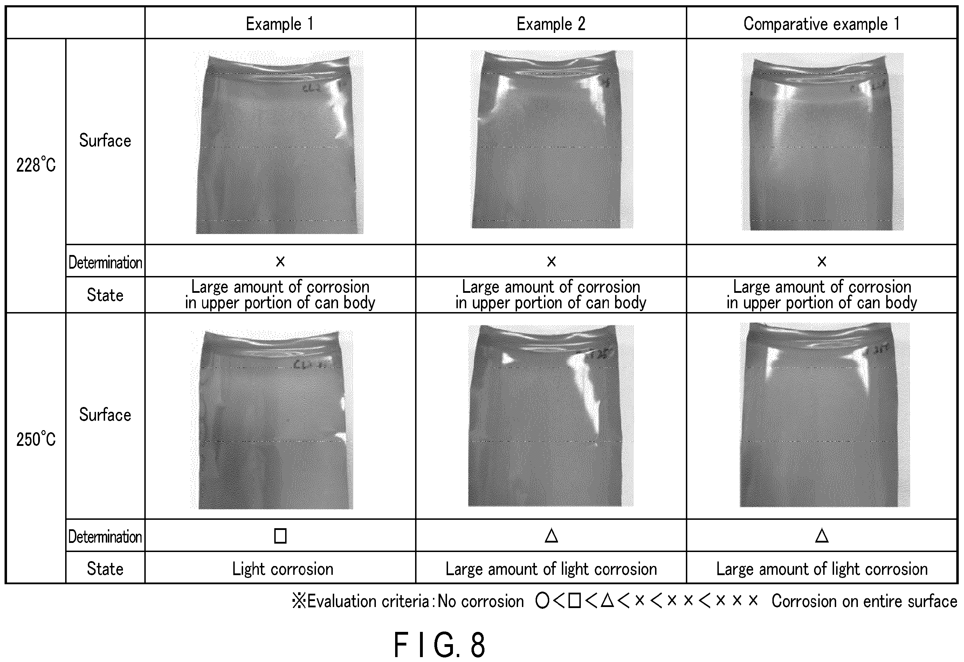

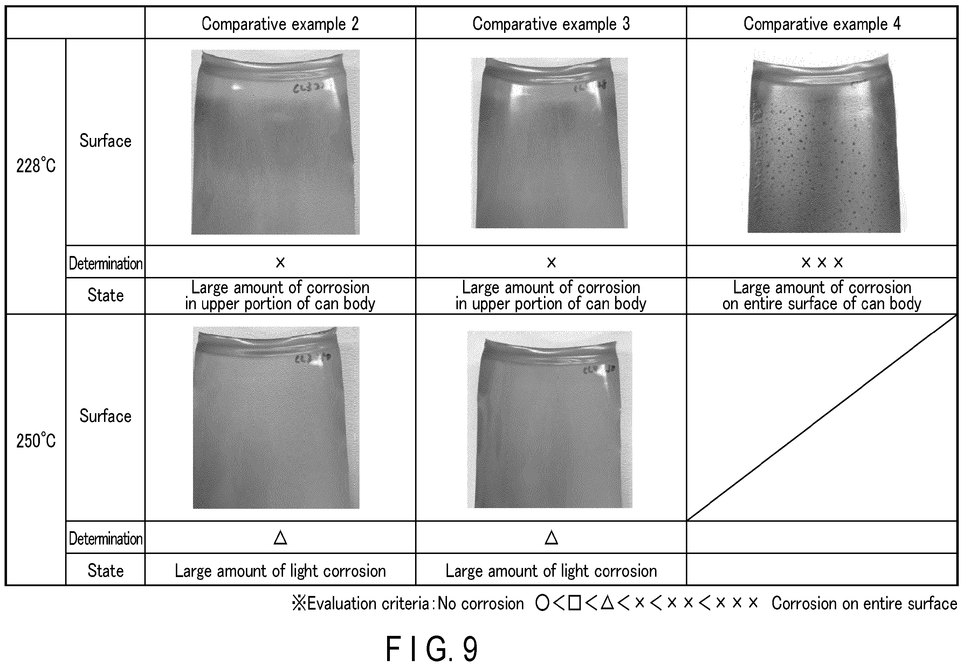

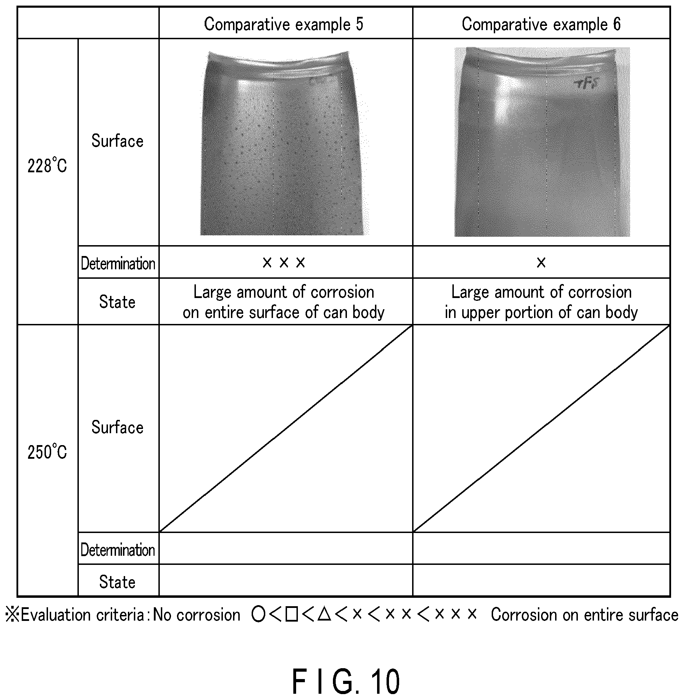

Results of Evaluation Tests 1 to 3 are shown in FIGS. 6 to 11. FIGS. 8 to 10 show an outline of the state of the inner surface of the can body 11 in addition to the determination result based on the evaluation criteria of Evaluation Test 2.

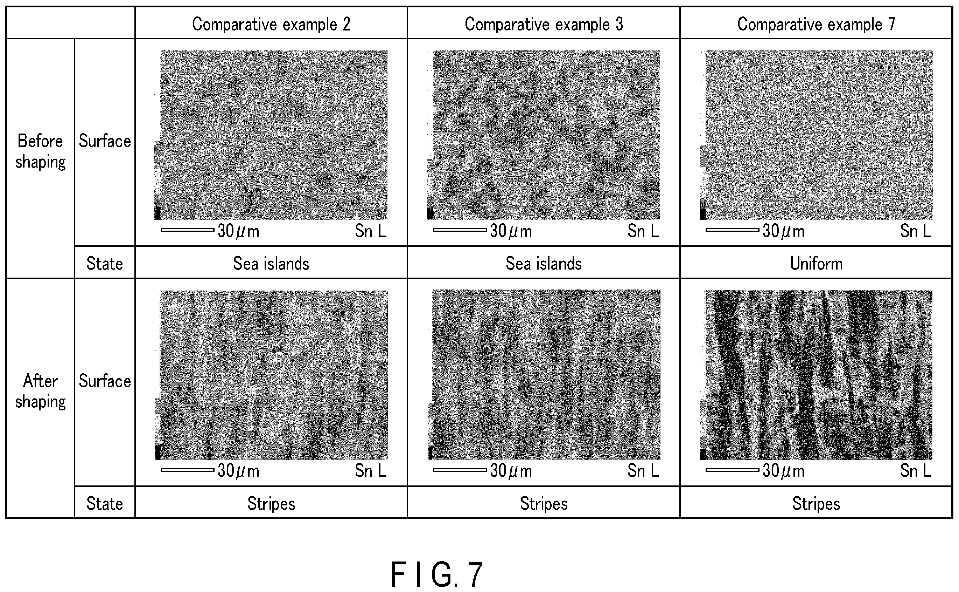

As shown in FIGS. 6 and 7, in Evaluation Test 1, Sn was uniformly distributed on the inner surface of the can body 11 before and after shaping of the can body 11 in Example 1 and Example 2. On the other hand, in Comparative Examples 1 to 3, Sn was distributed in a sea-island shape on the inner surface of the can body 11 before shaping, and Sn was distributed in a stripe shape on the inner surface of the can body 11 after shaping. In Comparative Example 7, Sn was uniformly distributed on the inner surface of the can body 11 before shaping, but after shaping, Sn was distributed in a stripe shape on the inner surface of the can body 11. From these results, according to the can bodies 11 of Example 1 and Example 2 of the present embodiment, since Sn was uniformly distributed on the inner surface of the can body 11 even after shaping, it was clear that the can body 11 had corrosion resistance over the entire inner surface of the can body 11.

As shown in FIGS. 8 to 10, in Evaluation Test 2, a large amount of corrosion occurred on the inner surface of the can body 11 heat-treated at 228 °C, which is lower than the melting point of the coating layer 140 for amorphization after shaping. On the other hand, in the can body 11 heat-treated at 250 °C, which is higher than the melting point of the coating layer 140 for amorphization after shaping, the inner surface was lightly corroded. From this result, it was clear that the corrosion resistance was improved by performing heat treatment at the melting point temperature of the coating layer 140 or higher to amorphize the coating layer 140.

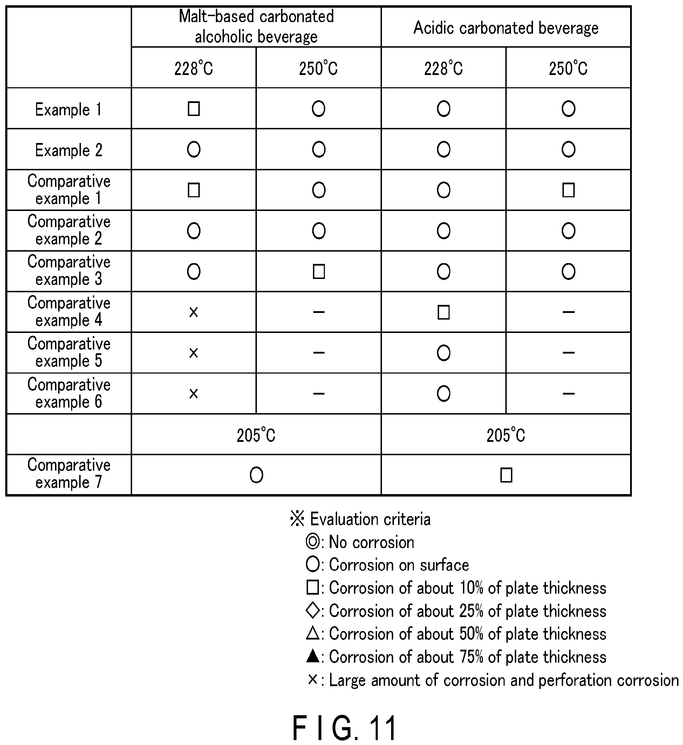

Further, as shown in FIG. 11, as a result of Evaluation Test 3, the can body 11 of each of Example 1, Example 2, Comparative Example 1 to Comparative Example 3, and Comparative Example 7 exhibited corrosion to a depth of about 10% of the plate thickness from the surface of the inner surface of the can body 11 at the maximum in both cases where the malt-based carbonated alcoholic beverage and the acidic carbonated beverage were put in the can body, and good results were obtained as a whole. When the can body 11 of each of Comparative Examples 4 to 6 was filled with the malt-based carbonated alcoholic beverage, a large amount of corrosion and perforation corrosion were observed on the inner surface of the can body 11.

The results of Evaluation Tests 1 to 3 described above show that high corrosion resistance can be obtained by configuring the can body 11 according to the embodiment described in Example 1 and Example 2.

The present invention is not limited to the above-described embodiment and the examples, and in the practical stage, various modifications may be made without departing from the spirit of the invention. In addition, the embodiments may be appropriately combined and implemented as much as possible, and in that case, combined effects may be obtained. Moreover, the above-described embodiment includes various stages of the invention, and various inventions can be extracted by suitably combining structural elements disclosed herein.

REFERENCE SIGNS LIST

1... two-piece can, 11... can body, 12... lid 21... bottom (bottom portion), 22... body portion (wall portion), 23... neck, 24... flange, 31... panel portion, 32... flange, 90... beverage (content), 100... metal plate, 101... base material, 110... Ni-plated layer, 120... Sn-plated layer, 130....Cr-plated layer, 140... coating layer, 200... intermediate product

**Claims**

1. A method for manufacturing a two-piece can, comprising:

punching a metal plate into a disk shape, the metal plate including a Sn-plated layer of 100 mg/m$^2$ or more and 1500 mg/m$^2$ or less provided on a base material made of steel, a Cr-plated layer of 6 mg/m$^2$ or more and 100 mg/m$^2$ or less provided on the Sn-plated layer, and a coating layer laminated on the Cr-plated layer and made of a thermoplastic resin, the metal plate having been not heat-treated and including a Ni-plated layer between the base material and the Sn-plated layer, or having been heat-treated and including no Ni-plated layer on the base material; and

shaping by performing drawing and ironing on the metal plate having the disk shape into a can body having a bottomed cylindrical shape, so that the coating layer forms an inner surface of the can body,

wherein in the shaping, the drawing and ironing is performed so that $((Tb-Tw)/Tb) \times 100$, which is a plate thickness reduction rate from the metal plate having the disk shape to the can body, is set as $35\% \leq ((Tb-Tw)/Tb) \times 100(\%) \leq 60\%$, where $Tw$ is a plate thickness of a thinnest part of a cylindrical wall portion of the can body, and $Tb$ is a plate thickness of a bottom portion of the can body.

2. The method for manufacturing a two-piece can according to claim 1, wherein the Sn-plated layer of the metal plate is uniformly coated in a granular form on the base material, at a coating ratio of 44% or more and 63% or less, and a portion of the Sn-plated layer is alloyed with Fe of the base material.

3. The method for manufacturing a two-piece can according to claim 1, wherein the metal plate includes the Ni-plated layer of less than 200 mg/m$^2$ between the base material and the Sn-plated layer.

4. The method for manufacturing a two-piece can according to claim 1, wherein the coating layer is formed of an amorphized polyester resin film having a thickness of 2 $\mu$m or more and 14 $\mu$m or less and a melting point of 200 °C or higher and 260 °C or lower.

5. The method for manufacturing a two-piece can according to claim 4, further comprising, after the shaping, heating the can body to the melting point of the coating layer and then rapidly cooling the can body to amorphize 35% or more and 100% or less of the coating layer.

6. A can body shaped from a metal plate and having a bottomed cylindrical shape, the metal plate including a Sn-plated layer of 100 mg/m$^2$ or more and 1500 mg/m$^2$ or less provided on a base material made of steel, a Cr-plated layer of 6 mg/m$^2$ or more and 100 mg/m$^2$ or less provided on the Sn-plated layer, and a coating layer laminated on the Cr-plated layer and made of a thermoplastic resin, the metal plate having not been heat-treated and including a Ni-plated layer between the base material and the Sn-plated layer, or having been heat-treated and including no Ni-plated layer on the base material, wherein

$((Tb-Tw)/Tb) \times 100$, which is a plate thickness reduction rate from the metal plate to the bottomed cylindrical shape, is set as $35\% \leq ((Tb-Tw)/Tb) \times 100(\%) \leq 60\%$, where $Tw$ is a plate thickness of a thinnest part of a cylindrical wall portion, and $Tb$ is a plate thickness of a bottom portion of the cylindrical shape.

7. The can body according to claim 6, wherein the Sn-plated layer of the metal plate is uniformly coated in a granular form on the base material, at a coating ratio of 44% or more and 63% or less, and a portion of the Sn-plated layer is alloyed with Fe of the base material.

8. The can body according to claim 6, wherein the metal plate includes the Ni-plated layer of less than 200 mg/m$^2$ between the base material and the Sn-plated layer.

9. The can body according to claim 6, wherein the coating layer is formed of an amorphized polyester resin film having a thickness of 2 $\mu$m or more and 14 $\mu$m or less and a melting point of 200 °C or higher and 260 °C or lower.

10. The can body according to claim 9, wherein 35% or more and 100% or less of the coating layer is amorphized.

11. A metal plate comprising:

a base material made of steel;
a Sn-plated layer of 100 mg/m$^2$ or more and 1500 mg/m$^2$ or less provided on the base material;
a Cr-plated layer of 6 mg/m$^2$ or more and 100 mg/m$^2$ or less provided on the Sn-plated layer; and
a coating layer laminated on the Cr-plated layer and made of a thermoplastic resin.

12. The metal plate according to claim 11, wherein the Sn-plated layer is uniformly coated in a granular form on the base material, at a coating ratio of 44% or more and 63% or less, and a portion of the Sn-plated layer is alloyed with Fe of the base material.

13. The metal plate according to claim 11, further comprising a Ni-plated layer having a weight per unit area of less than 200 mg/m$^2$ between the base material and the Sn-plated layer.

14. The metal plate according to claim 11, wherein the coating layer is formed of a polyester resin film having a thickness of 2 μm or more and 25 μm or less and a melting point of 200 °C or higher and 260 °C or lower.

F I G. 1

F I G. 2

F I G. 3

START

Punching ~ST1

Drawing and ironing ~ST2

Bottom shaping ~ST3

Trimming ~ST4

Coating ~ST5

Neck shaping ~ST6

Flange shaping ~ST7

Amorphization ~ST8

Content filling ~ST9

Lid roll-seaming ~ST10

END

F I G. 4

F I G. 5

EP 4 029 797 A1

EP 4 029 797 A1

| | | Example 1 | Example 2 | Comparative example 1 |
|---|---|---|---|---|
| Before shaping | Surface | 30μm Sn L | 30μm Sn L | 30μm Sn L |
| | State | Uniform | Uniform | Sea islands |
| After shaping | Surface | 30μm Sn L | 30μm Ni K | 30μm Sn L |
| | State | Uniform | Uniform | Stripes |

FIG. 6

| | | Comparative example 2 | Comparative example 3 | Comparative example 7 |
|---|---|---|---|---|
| Before shaping | Surface | 30 μm　　Sn L | 30 μm　　Sn L | 30 μm　　Sn L |
| | State | Sea islands | Sea islands | Uniform |
| After shaping | Surface | 30 μm　　Sn L | 30 μm　　Sn L | 30 μm　　Sn L |
| | State | Stripes | Stripes | Stripes |

F I G. 7

|  |  | Example 1 | Example 2 | Comparative example 1 |
|---|---|---|---|---|
| 228°C | Surface | | | |
|  | Determination | × | × | × |
|  | State | Large amount of corrosion in upper portion of can body | Large amount of corrosion in upper portion of can body | Large amount of corrosion in upper portion of can body |
| 250°C | Surface | | | |
|  | Determination | □ | △ | △ |
|  | State | Light corrosion | Large amount of light corrosion | Large amount of light corrosion |

※Evaluation criteria：No corrosion ○＜□＜△＜×＜× ×＜× × × Corrosion on entire surface

FIG. 8

|  |  | Comparative example 2 | Comparative example 3 | Comparative example 4 |
|---|---|---|---|---|
| 228°C | Surface | | | |
|  | Determination | × | × | × × × |
|  | State | Large amount of corrosion in upper portion of can body | Large amount of corrosion in upper portion of can body | Large amount of corrosion on entire surface of can body |
| 250°C | Surface | | | |
|  | Determination | △ | △ | |
|  | State | Large amount of light corrosion | Large amount of light corrosion | |

※Evaluation criteria：No corrosion　○＜□＜△＜×＜× ×＜× × ×　Corrosion on entire surface

# F I G. 9

|  |  | Comparative example 5 | Comparative example 6 |
|---|---|---|---|
| 228°C | Surface | | |
|  | Determination | × × × | × |
|  | State | Large amount of corrosion on entire surface of can body | Large amount of corrosion in upper portion of can body |
| 250°C | Surface |  |  |
|  | Determination |  |  |
|  | State |  |  |

※Evaluation criteria：No corrosion ○＜□＜△＜×＜× ×＜× × ×　Corrosion on entire surface

# FIG. 10

| | Malt-based carbonated alcoholic beverage | | Acidic carbonated beverage | |
|---|---|---|---|---|
| | 228°C | 250°C | 228°C | 250°C |
| Example 1 | □ | ○ | ○ | ○ |
| Example 2 | ○ | ○ | ○ | ○ |
| Comparative example 1 | □ | ○ | ○ | □ |
| Comparative example 2 | ○ | ○ | ○ | ○ |
| Comparative example 3 | ○ | □ | ○ | ○ |
| Comparative example 4 | × | – | □ | – |
| Comparative example 5 | × | – | ○ | – |
| Comparative example 6 | × | – | ○ | – |
| | 205°C | | 205°C | |
| Comparative example 7 | ○ | | □ | |

※ Evaluation criteria
◎: No corrosion
○: Corrosion on surface
□: Corrosion of about 10% of plate thickness
◇: Corrosion of about 25% of plate thickness
△: Corrosion of about 50% of plate thickness
▲: Corrosion of about 75% of plate thickness
×: Large amount of corrosion and perforation corrosion

F I G. 11

## INTERNATIONAL SEARCH REPORT

| | International application No. |
|---|---|
| | PCT/JP2019/036200 |

A. CLASSIFICATION OF SUBJECT MATTER
Int. Cl. B65D1/00(2006.01)i, B21D51/26(2006.01)i, B65D1/16(2006.01)i

According to International Patent Classification (IPC) or to both national classification and IPC

B. FIELDS SEARCHED

Minimum documentation searched (classification system followed by classification symbols)
Int. Cl. B65D1/00, B21D51/26, B65D1/16

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 6-218465 A (TOYO SEIKAN KAISHA, LTD.) 09 August 1994, paragraphs [0001], [0007]-[0044], fig. 1-5 & EP 04493133 A2, page 2, lines 5-9, page 2, line 55 to page 10, line 9, fig. 1-5 | 1-10, 12, 14 |
| X | JP 9-241865 A (KAWASAKI STEEL CORP.) 16 September 1997, paragraphs [0007]-[0036] (Family: none) | 11 |
| Y | | 1-10, 12-14 |
| Y | JP 2003-231989 A (TOYO KOHAN CO., LTD.) 19 August 2003, paragraphs [0008]-[0025] (Family: none) | 1-10, 12-13 |
| Y | JP 6-226914 A (KIRIN BREWERY CO., LTD.) 16 August 1994, paragraphs [0034], [0035] (Family: none) | 1-10 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21.11.2019 | 03.12.2019 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/036200 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2001-262371 A (NIPPON STEEL CORP.) 26 September 2001, paragraphs [0008]-[0080] (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2015037074 A